# EUROPEAN PATENT SPECIFICATION

(11) **EP 3 799 706 B1**
(45) Date of publication and mention of the grant of the patent: **09.08.2023**
(21) Application number: 20198914.2
(22) Date of filing: 29.09.2020
(51) Int. Cl.: A01B 9/00, A01B 13/02, A01B 33/02

(54) **A DEVICE FOR CREATING AT LEAST ONE ASPARAGUS BED FROM A WINTER BED AND METHOD FOR CREATING AT LEAST ONE ASPARAGUS BED FROM A WINTER BED**
VORRICHTUNG ZUM ERZEUGEN MINDESTENS EINES SPARGELBEETES AUS EINEM WINTERBEET UND VERFAHREN ZUM ERZEUGEN MINDESTENS EINES SPARGELBEETES AUS EINEM WINTERBEET
DISPOSITIF POUR CRÉER AU MOINS UN LIT D'ASPERGES À PARTIR D'UN LIT D'HIVER ET PROCÉDÉ POUR CRÉER AU MOINS UN LIT D'ASPERGES À PARTIR D'UN LIT D'HIVER

(30) Priority: 01.10.2019 NL 2023926
(43) Date of publication of application: 07.04.2021
(73) Proprietor: Engels Familie Holding B.V., 5981 NZ Panningen (NL)
(72) Inventor: ENGELS, Franciscus Maria, 5981 NZ Panningen (NL); ENGELS, Marcus Franciscus, 5981 NZ Panningen (NL); ENGELS, Christiaan Michiel, 5981 NZ Panningen (NL)
(74) Representative: Algemeen Octrooi- en Merkenbureau B.V.

(56) References cited:
- CA-C- 2 023 798
- DE-A1- 4 014 024
- DE-A1- 19 917 199
- FR-A- 1 539 508
- GB-A- 828 098
- JP-A- 2012 231 742
- RU-C1- 2 614 379
- RU-U1- 190 897
- US-A- 3 963 078

## Description

The invention relates to a device for creating at least one asparagus bed from a winter bed, which device is displaceable in a direction of travel for creating the asparagus bed from the winter bed, wherein the device is provided with at least one soil tillage member comprising at least one soil tillage element which is rotatable about a rotation axis.

The invention furthermore relates to a method for creating at least one asparagus bed from a winter bed.

The invention also relates to an asparagus field which has been created using the method and/or device described in this document.

US 3 963 078, GB 828 098 and FR 1 539 508 disclose soil cultivation machines. RU 2 614 379, RU 190 897, CA 2 023 798 and JP 2012 231742 disclose machines for providing furrows/ridges. DE 40 14 024 discloses a machine for forming furrows in the soil for the cultivation of asparagus, wherein the machine has a vertical mounted rotor for processing the soil.

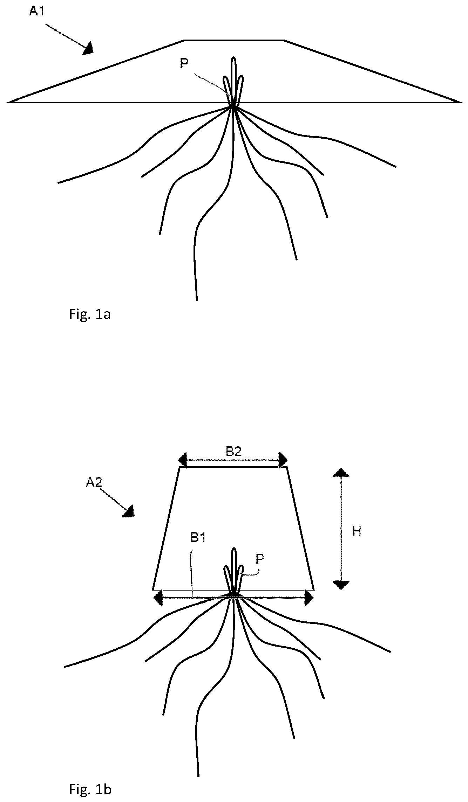

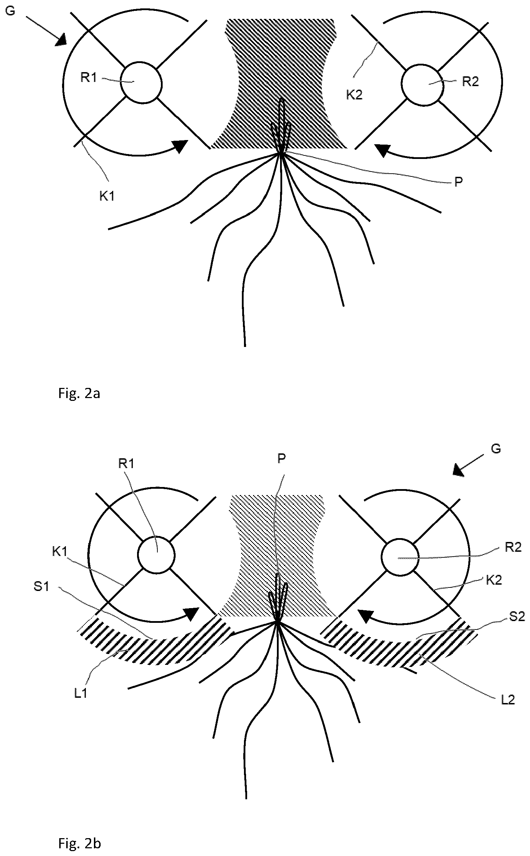

The cultivation of asparagus is a cultivation which takes more than one year. Every year, before the harvest, the asparagus fields are cultivated in order to create new asparagus beds from winter beds. The attached Fig. 1a shows a winter bed, while Fig. 1b shows an asparagus bed created from a winter bed. Typical for a winter bed is the fact that the winter bed is wider and less high than the asparagus bed, as is shown in Figs. 1a and 1b. Currently, in the cultivation of asparagus, a device comprising a soil tillage member is used to create an asparagus bed from a winter bed every year. The known soil tillage member comprises a bed cultivator, as shown diagrammatically in Figs. 2a and 2b, wherein the device is fitted behind a tractor and processes the soil from both tracks of the tractor with a rotary cultivator having tongues rotating inwardly about a rotation axis to shape a pile of soil for the asparagus bed between the tracks. An asparagus bed is formed from the heaped soil by means of the forward movement of the tractor using pressure plates. Such a device is for example known from DE 199 17 199.

The drawback is that the tractor first compacts the soil by driving over the soil and the soil then requires a considerable degree of power to loosen this soil again using a cultivator before an asparagus bed can be formed which is airy. An additional drawback is the fact that the scraping movement of the cultivator, as is shown in Fig. 2b, produces a relatively hard layer of compacted/compressed soil in the track, which is not contributory for the development of the roots of the asparagus plant and consequently necessitates an additional mechanical operation to process the hard layer which the tractor and the tongues have produced. Another drawback is that the tongues rotating towards the bed loosen soil from the tracks and only force the soil of the winter bed laterally upwards from below, as a result of which the soil of the winter bed above the asparagus plant which is yet to develop, the so-called growing section for the asparagus stem to be harvested, is not cultivated, or only to a minimal degree, and is consequently relatively compacted, which is not contributory for the growth of the stems to be harvested.

It is therefore an object of the invention to provide a device by means of which at least one asparagus bed can be created from a winter bed, in which asparagus plants can grow in a more optimal manner in order to enhance the harvestproductivity.

This object is achieved by a device according to Claim 1.

The device for creating at least one asparagus bed from a winter bed is displaceable in a direction of travel for creating the asparagus bed from the winter bed, wherein the device is provided with at least one soil tillage member comprising at least one soil tillage element rotatable about a rotation axis. In contrast with the known bed cultivator, the rotation axis of the at least one rotatable soil tillage element extends substantially traverse to the direction of travel. In this way, a substantial part of the soil of the winter bed is cultivated to form tilled soil for the asparagus bed. In order to turn the soil of the winter bed into an asparagus bed in which asparagus plants can grow in a more optimal manner, the soil of the winter bed is processed by means of the device by means of the at least one soil tillage element which rotates about the rotation axis, which rotation axis extending traverse to the direction of travel also extends parallel to the width direction of the winter bed elongately extending in the length direction. By tilling a substantial part of the soil in the winter bed in order to form the asparagus bed, relatively little power is required to create the asparagus bed. This new process to create an asparagus bed which requires less power makes it possible to design the device having a relatively low weight, which even renders the use of a tractor obsolete. In addition, the soil tillage member can be designed to have a relatively limited width dimension, the width direction is the direction traverse to the direction of travel, since a substantial part of or even only soil from the winter bed has to be processed and no or only a minimal amount of the soil outside the winter bed, such as for example soil in the tracks, as is the case with the known device. By using more compact and less heavy equipment to create the asparagus beds, the soil next to the asparagus bed to be formed is compressed/compacted to a lesser degree, as a result of which rainwater and, optionally, air are better able to reach the roots of the asparagus plant and the roots are better able to develop, also in the soil next to the asparagus bed. Furthermore, with compressed/compacted soil, there is a greater risk of water remaining behind on the field, in particular in the tracks between the asparagus beds, which may also have an adverse effect on access for harvesting machines for harvesting the asparagus.

It is an advantage of the device that, due to the orientation of the rotation axis of the at least one rotatable soil tillage element, the winter bed can be processed from above, as a result of which a substantial part of or virtually all soil in the winter bed can be tilled by means of the at least one rotatable soil tillage element. This also prevents a relatively hard layer of compacted soil in the track which is partly caused by the soil tillage element, as a result of which the roots of the asparagus plant can develop in an optimum manner without additional measures having to be taken. In addition, the growth of the asparagus plant is greatly improved by the fact that, due to the orientation of the rotation axis of the rotatable soil tillage element, the soil of the winter bed above the asparagus plant which is yet to develop, the so-called growing section for the asparagus stem to be harvested, can be processed to the maximum degree, as a result of which an asparagus bed is provided comprising soil of a relatively airy composition above the asparagus plant which is yet to develop, which is particularly contributory for the growth of the stems to be harvested.

The rotation axis of the at least one rotatable soil tillage element can be set to an adjustable distance with respect to the winter bed. The at least one rotatable soil tillage element can be rotated at an adjustable speed of rotation by means of a drive unit of the device. Due to the forward movement of the device in the direction of travel, the or each soil tillage element scoops up soil and the scooped-up soil is thrown up by the rotating movement of the at least one soil tillage element, resulting in an airy composition of the soil for the asparagus bed. The asparagus stem grows best when the soil above the developing plant is airy.

The soil tillage member may furthermore comprise a preprocessing mechanism for forming the winter bed into a higher and narrower intermediate form than the winter bed, wherein the soil of the winter bed in the formed intermediate form can subsequently be cultivated by means of the at least one soil tillage element by displacing the device in the direction of travel.

By means of the preprocessing mechanism, the soil of the winter bed is centred, as a result of which an intermediate bed form is produced which is higher and narrower than the winter bed. The preprocessing mechanism may comprise two preprocessing elements which are positioned on either side of the winter bed and enclose an acute angle with the length direction of the winter bed or the direction of travel of the device, in such a way that the front parts of the preprocessing elements are situated further apart from each other than the rear parts are, for example the preprocessing elements of the preprocessing mechanism are two ploughing elements, such as for example two ploughing discs, optionally drivable by means of a drive unit.

The soil tillage member may furthermore comprise an asparagus bed-forming unit for forming the asparagus bed after performing the operation using the at least one soil tillage element.

The soil processed by means of the at least one soil tillage element is collected in the asparagus bed-forming unit which roughly has the shape of the asparagus bed to be formed. Due to the forward movement thereof, an asparagus bed having the desired shape and size is created behind the asparagus bed-forming unit. The asparagus bed-forming unit may, for example, have adjustable plates to form an asparagus bed of the desired shape and dimensions.

According to another aspect of the device, the soil of the winter bed can be processed in such a way by means of the at least one soil tillage element which is rotatable about a rotation axis that soil having a more airy composition than the soil of the winter bed can thus be created, preferably tilling by means of the at least one soil tillage element comprises at least scooping up and turning over the soil of the winter bed.

According to a further aspect, the working width of the soil tillage element which is at least rotatable about a rotation axis, which working width extends traverse to the direction of travel during operation, is equal to or greater than the maximum width of the asparagus bed to be created by means of the device and/or smaller than or equal to the maximum width of a winter bed to be processed.

The maximum width of an asparagus bed for the large-scale cultivation of asparagus is approximately 1.0 metre, whereas the maximum width of the winter bed is approximately 1.4 metre. By making the working width of the at least one soil tillage element equal to or greater than the maximum width of the asparagus bed, it is possible to ensure, if the above-described preprocessing mechanism is used to form the intermediate form-bed, that virtually all the soil or in each case substantially all the soil of the winter bed is processed by means of the soil tillage element. If the preprocessing mechanism is not used, the maximum working width of the at least one soil tillage element corresponds at most to the maximum working width of the winter bed, so that all or substantially all the soil of the winter bed is processed, while the dimensions of the at least one soil tillage element are not greater than necessary for creating the asparagus bed. In addition, the weight of the preprocessing mechanism is kept relatively limited in this way.

According to an aspect, the soil tillage member comprises various soil tillage elements, for example digging blades, which are attached to a driven bar, preferably next to each other and/or forming a central angle with each other, for rotating the soil tillage elements about the rotation axis by means of the driven bar. Instead of using a single rotation axis with at least one soil tillage element, it is also possible to configure the soil tillage member to have a number of rotation axes, wherein each rotation axis is provided with at least one soil tillage element and each rotation axis extends substantially traverse to the direction of travel of the device for cultivating the soil of the winter bed.

A plurality of soil tillage elements may be fitted to a driven axle which is moved in the direction of travel at a certain distance above the soil of the cultivated section.

The radius of a virtual working circle measured from the rotation axis of the at least one soil tillage element is between 40-60 centimetres. The rotation axis of the soil tillage element is adjustable to a desired height, preferably a height which depends on the height of the asparagus bed to be created, so that as much soil of the winter bed as possible can be tilled using the soil tillage element.

The device may be configured as a self-propelled device, since the required power for operating the at least one soil tillage element for creating the asparagus beds is relatively limited. Compared to a tractor, a self-propelled device which is configured for creating asparagus beds has a relatively low weight, as a result of which the ground next to the asparagus bed will also be less compacted during the creation of the asparagus bed, which will result in better drainage of rainwater between the asparagus beds, which is advantageous for the plant due to an improved supply of rainwater to the roots of the plant, and improves the accessibility for machines to the asparagus field, because the risk of puddles of water in the tracks is reduced. Of course, it is also possible to design the device in such a way that it is fitted to a tractor, in which case the weight advantages to be achieved are limited due to the use of the tractor.

The device may be provided with at least two wheels, the distance between which, measured traverse to the direction of travel, is greater than the maximum width of the winter bed, with the maximum width of the soil tillage member being smaller than the (shortest) distance measured between the at least two wheels traverse to the direction of travel.

The maximum width of the soil tillage element measured traverse to the direction of travel is preferably at most equal to or smaller than the maximum width of the winter bed, while the maximum width of the preprocessing mechanism may be greater than the maximum width of the winter bed, but is smaller than the shortest distance between the at least two wheels of the device, measured traverse to the direction of travel. In this way, a soil tillage member of relatively compact dimensions is achieved and, due to the maximum width dimension of the soil tillage element and the configuration of the preprocessing mechanism, as a result of which only soil of the winter bed is cultivated, it is prevented that soil outside the winter bed is cultivated by means of the soil tillage member. Consequently, all operations of the device take place within the track width of the device or even within the track width of the tractor. Using the available space between the wheels of the device or of a tractor, it is furthermore possible to determine the maximum width of the winter bed. All this in contrast with the method of a conventional bed cultivator, where the cultivation of the soil only takes place in the track of the tractor.

The self-propelled or pulled device may be provided with at least two front wheels, the distance between which is greater than the maximum width of the winter bed, and with at least two rear wheels, the distance between which is greater than the maximum width of the winter bed.

It is a further object of the invention to provide a method by means of which at least one asparagus bed can be created from a winter bed, in which asparagus plants can grow in a more optimal manner in order to enhance the harvestproductivity. This object is achieved by forming the asparagus bed by means of a device as described in this document.

By means of the device, the soil in the winter bed is tilled in order to create the asparagus bed, in which case an area between two winter beds extending in a longitudinal direction remains substantially uncultivated by the device. In the new cultivation process, the asparagus field can be divided into two sections, the area between the winter beds which is not cultivated by means of the device and the cultivated section. The area between the winter beds may, for example, be landscaped (laid out) as a green area which will not be tilled by the device for the entire life cycle of the asparagus plants. The green area is for example a green area planted with grass or a grass-like plant. The green area may serve as a track for light tractors and harvesting machines, which greatly improves the accessibility of the asparagus field for machines, in particular with a green area planted with grass or a grass-like plant.

According to a further aspect of the method, only the soil in the winter bed is tilled by means of the device for creating the asparagus bed. In this way, it is possible to only use the soil from the winter bed during the entire life cycle of the asparagus plants. In order to be able to apply this variant method, the dimensions of the winter bed and the volume of soil of the winter bed corresponding to the dimensions have to correspond to the required volume of soil for creating the asparagus bed in order to ensure that only soil from the winter bed is used to form the asparagus bed with the desired dimensions.

The successive steps which are to be carried out with the method for creating an asparagus bed are:
- forming the winter bed into a higher and narrower intermediate form than the winter bed;
- cultivating the soil of the winter bed in the formed intermediate form for providing soil with a more airy composition than the soil of the winter bed; and/or
- forming the asparagus bed by means of the soil with the more airy composition than the soil of the winter bed. In this way, an asparagus bed or an asparagus field containing different asparagus beds may be provided. These three steps may, if desired, also be carried out in a different way than by means of the features of the device described and defined in this document.

The above-described aspects will be explained below by means of exemplary embodiments in combination with the figures. However, the invention is not limited to the exemplary embodiments described below. Rather, a number of variants and modifications are possible which also use the inventive idea and therefore fall within the scope of protection. In particular, the possibility of combining the features/aspects which are only mentioned in the description and/or shown in the figures with the features of the claims, in so far as compatible, is mentioned.

In this case, reference is made to the following figures, in which:
Figs. 1a,b diagrammatically show a winter bed which is known per se and an asparagus bed which is known per se;
Figs. 2a,b diagrammatically show a component of a device which is known from the prior art for creating an asparagus bed from a winter bed;
Figs. 3a-e diagrammatically show different views of components of an embodiment of a soil tillage member for creating an asparagus bed;
Fig. 4 diagrammatically shows a sectional view of a part of an asparagus field to illustrate a number of method steps for creating an asparagus field from a winter bed;
Fig. 5a,b show a perspective and front view, respectively, of a second embodiment of the device.

In the figures, identical components are provided with identical reference numerals.

As is illustrated in Figs. 1a,b, in terms of illustrated cross section, the winter bed A1 and the asparagus bed A2 have the shape of a cross section of a truncated square pyramid. Both the winter bed A1 and the asparagus bed A2 extend in a length direction, with the length direction extending perpendicularly to the plane of the drawing in Figs. 1a,b. The difference between the winter bed A1 and the asparagus bed A2 is typically the height H which is greater with the asparagus bed A2 than with the winter bed A1, and the maximum width B1 of the asparagus bed A2 which is smaller than with the winter bed A1. The minimum width B2 of the asparagus bed A2 is approximately equal to the minimum width of the winter bed A1. During formation of the asparagus bed, the roots of the asparagus plant P which is yet to develop are preferably under the winter bed A1 / asparagus bed A2, wherein the stems which are yet to develop extend in the winter bed A1 / asparagus bed A2 only very slightly or not at all yet.

Figs. 2a,b diagrammatically show at least a part of the known soil tillage member G with a bed cultivator as diagrammatically shown in Figs. 2a and 2b, wherein the known device is fitted behind a tractor (not shown) and processes the soil from both tracks of the tractor with tongues K rotating inwards about a rotation axis R1, R2 to form a pile of soil for the asparagus bed between the tracks S1, S2. By means of pressure plates (not shown), an asparagus bed is formed from the accumulated soil by the forward movement of the tractor. As is shown in Fig. 2b, the wheels of the tractor and the scraping of the cultivator produce a relatively hard layer L1, L2 of compacted soil at the track S1, S2, which is not contributory for the development of the roots of the asparagus plant. Another drawback is the fact that the inwardly rotating tongues K1, K2 cut soil out of the tracks, and force the soil of the winter bed only laterally upwards from below, as a result of which the soil of the winter bed directly above the asparagus plant P which is yet to develop, the so-called growing section for the asparagus stem to be harvested, is not processed or only to a minimal extent and is consequently relatively compacted, which is not contributory for the growth of the stems to be harvested.

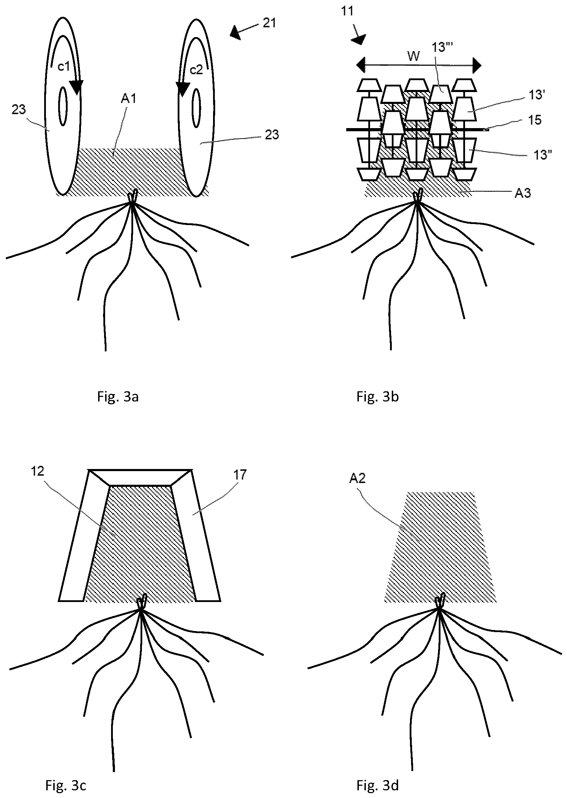

Figs. 3a-e show possible embodiments of tools for creating an asparagus bed from a winter bed using a method, comprising at least a selection of a number of method steps which are described below

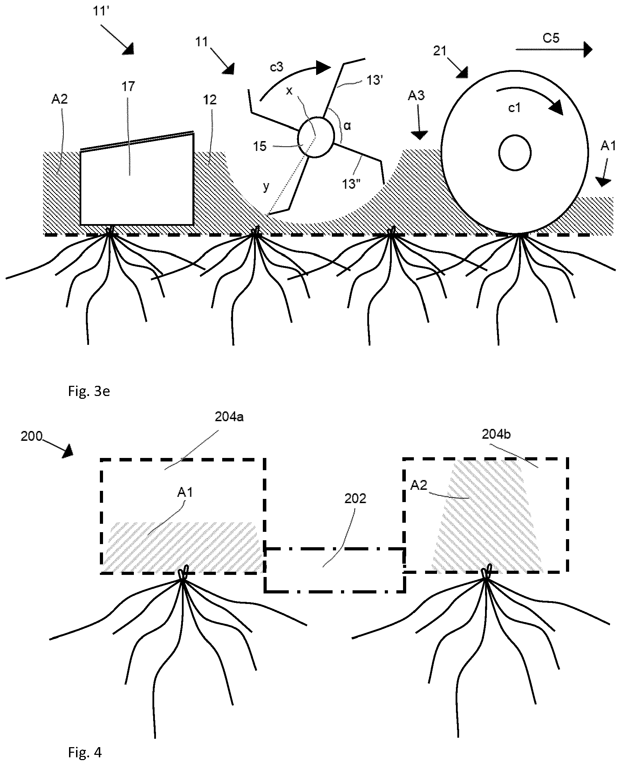

- Fig. 3a shows a preprocessing mechanism 21 comprising two ploughing discs 23 which can be rotatably driven in a direction of rotation c1, c2 for forming an intermediate form bed A3 (see Figs. 3b and 3e) of the winter bed A1, wherein the intermediate form bed A3 is higher and narrower/less wide than the winter bed A1 ;
- Fig. 3b shows a soil tillage member 11 comprising a number of soil tillage elements 13, 13', 13" (see Figs. 3b and 3e, in which only three of the twenty soil tillage elements are provided with a reference numeral) which are attached to a bar 15, which bar 15 can be rotated about a virtual rotation axis x in a direction of rotation c3 for cultivating the soil of the winter bed in the formed intermediate form A3 for providing soil 12 having a more airy composition than the soil of the winter bed A1;
- Fig. 3c shows a funnel-shaped asparagus bed-forming unit 17 for forming the asparagus bed A2 after performing the operation with the soil tillage elements 13, 13', 13". By means of the asparagus bed-forming unit 17, the asparagus bed A2 can be formed by means of the soil 12 with a more airy composition than the soil of the winter bed A1. In this way, an asparagus bed or an asparagus field with various asparagus beds can be provided. These three steps are preferably to be performed in succession in the sequence described, as is illustrated in Fig. 3e, for forming the asparagus bed A2, in which case it is not necessary for all method steps which can be performed with a single device moving in a direction of travel to be performed. However, it is possible to provide a device which comprises a soil tillage member 11' which comprises all three tools shown in Fig. 3e or a combination of the soil tillage member 11 with the asparagus bed-forming unit 17 of the soil tillage member 11 with the preprocessing mechanism 21. As is shown in Fig. 3e, the device (not shown) comprises the soil tillage member 11', wherein the device is displaceable in a direction of travel c5 for creating the asparagus bed A2 from the winter bed A1, wherein the main component 11 of the soil tillage member 11' comprises at least one soil tillage element 13' rotatable about a rotation axis. The rotation axis x (Fig. 3e) of the rotatable soil tillage element 13' which, in Fig. 3, coincides with the axis of the bar 15 extends traverse or substantially traverse to the direction of travel c5 in order to cultivate the soil of the winter bed A1 to form cultivated soil 12 for the asparagus bed A2. The direction of travel c5 extends in the same direction as the length direction of the winter bed A1 / asparagus bed A2.

By means of the soil tillage elements which are rotatable about the rotation axis, soil having a more airy composition than the soil of the winter bed can be provided. The various soil tillage elements are digging blades 13, 13', 13" which are attached to a driven bar 15 next to one another and also in such a manner that they form a central angle α with each other so as to rotate the digging blades 13, 13', 13' about the rotation axis x by means of the driven bar. Due to the forward movement in the direction of travel C5, the digging blades 13, 13', 13" scoop up soil from the intermediate form-bed A3. Due to the rotating movement of the digging blades 13, 13', 13", the soil is then thrown up by the soil tillage elements in the direction of rotation indicated by arrow c3 (in clockwise direction, with a direction of travel towards the right, as is shown in Fig. 3e). This treatment of the soil results in an airy composition of the cultivated soil 12. This treated soil 12 can then be accumulated in a funnel-shaped asparagus bed-forming unit 17 which comprises roughly the shape of the asparagus bed A2 in the length direction (identical to the direction of travel c5). Due to the forward movement in the direction of travel c5, an asparagus bed A2 having the desired shape and dimensions is formed behind this funnel-shaped asparagus bed-forming unit 17.

The radius y of a virtual working circle, measured from the rotation axis x formed by digging blades 13, 13', 13" is between 40-60 centimetres. The bar 15 is adjustable to a desired height. A working width W of the rotatable soil tillage elements 13, 13', 13", which working width extends traverse to the direction of travel during operation, is equal to or greater than the maximum width B1 of the asparagus bed A2 to be created by means of the device and/or smaller than or equal to the maximum width of a winter bed A1 to be cultivated.

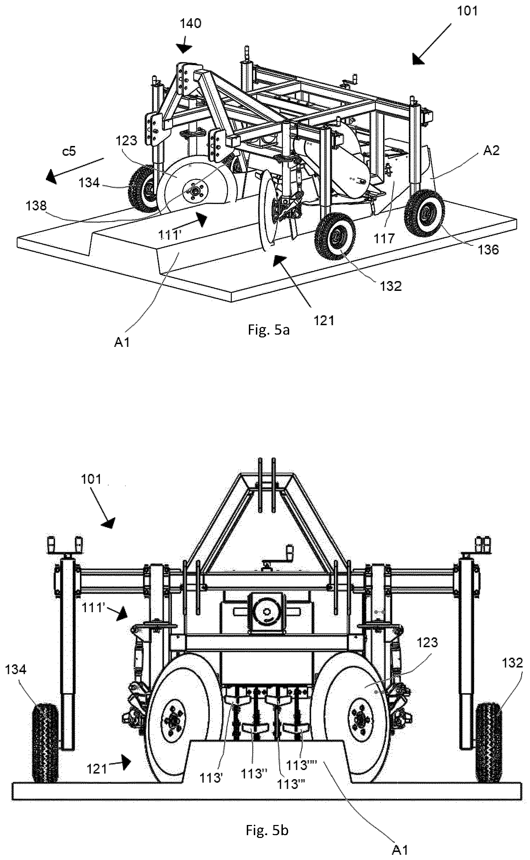

Figs. 5a,b show an embodiment of a device 101 for creating at least one asparagus bed A2 from a winter bed A1. The device 101 is provided with at least two front wheels 132, 134, the distance between which is greater than the maximum width of the winter bed A1, and with at least two rear wheels 136, 138, the distance between which is greater than the maximum width of the winter bed A1. The device 101 is displaceable in a direction of travel c5 for creating the asparagus bed A2 from the winter bed A1, in which case identical or similar components shown in Figs. 3a-e are denoted by a numeral which is augmented by 100. The device is provided with a soil tillage member 111' comprising at least one soil tillage element 113', 113", 113'", 113ʺʺ which is rotatable about a rotation axis. The soil tillage elements 113', 113", 113‴, 113ʺʺ are attached to a bar which can be rotatably driven and whose rotation axis extends substantially traverse to the direction of travel c5 for cultivating the soil of the winter bed A1 to form the cultivated soil for the asparagus bed A2. In a way similar to that shown in Fig. 3e, the soil tillage member 111' of the device 101 is furthermore provided with:
- a preprocessing mechanism 121 for forming the winter bed into a higher and narrower intermediate form than the winter bed, wherein the soil of the winter bed in the formed intermediate form can subsequently be cultivated by means of the soil tillage elements 113', 113", 113‴, 113ʺʺ due to the displacement of the device 101 in the direction of travel c5;
- an asparagus bed-forming unit 117 for forming the asparagus bed after performing the operation with the soil tillage elements 113', 113", 113'", 113"".

Although the illustrated device 101 can be attached to another vehicle (not shown) by means of attachment means 140 in order to be displaced in the direction of travel c5, it is also possible to design the device 101 to be self-propelled by providing the device with a drive unit for driving at least a number of the wheels 132, 134, 136, 138.

In Fig. 4, the new cultivating process is illustrated, in which the asparagus field 200 is divided into two sections, the area between the winter beds 202 which is not processed by means of the above-described device 101 and the cultivated sections 204a, 204b which are processed with the device 101. The area 202 between the winter beds may, for example, be landscaped as a green area which will not be tilled by the device 101 for the entire life cycle of the asparagus plants. The green area is for example a green area planted with grass or a grass-like plant. The green area may serve as a track for light tractors and harvesting machines, which greatly improves the accessibility of the asparagus field for machines, in particular with a green area planted with grass or a grass-like plant. The green area also prevents an asparagus field with a monoculture and contributes to increasing the CO2 storage capacity of the asparagus field in a relatively simple way. The advantage of the green area is that soil life can develop during the entire life cycle of the asparagus plant, resulting in a deep root cluster of vegetation in the green area, as a result of which rainwater can subside more quickly. Its root cluster also results in an increased load-bearing capacity so that machines can drive on the track without damaging it and without compacting the soil.

## Claims

1. A device (101) for creating at least one asparagus bed (A2) from a winter bed (A1), which device is displaceable in a direction of travel (c5) for creating the asparagus bed from the winter bed, wherein the device is provided with at least one soil tillage member (11; 111') comprising at least one soil tillage element (13, 13', 13"; 113', 113", 113") which is rotatable about a rotation axis (x), wherein the rotation axis of the rotatable soil tillage element extends substantially traverse to the direction of travel for cultivating the soil of the winter bed to form cultivated soil for the asparagus bed, wherein the soil tillage member furthermore comprises a preprocessing mechanism (21; 121) for forming the winter bed into a higher and narrower intermediate form (A3) than the winter bed, wherein the soil of the winter bed in the formed intermediate form can subsequently be cultivated by means of the at least one soil tillage element by displacing the device in the direction of travel.

2. The device (101) according to Claim 1, wherein the soil tillage member furthermore comprises an asparagus bed-forming unit (17; 117) for forming the asparagus bed after performing the operation using the at least one soil tillage element.

3. The device (101) according to one of the preceding claims, wherein the soil of the winter bed can be processed in such a way by means of the at least one soil tillage element which is rotatable about a rotation axis that soil having a more airy composition than the soil of the winter bed can be created, preferably tilling by means of the at least one soil tillage element comprises at least the scooping up and turning over of the soil of the winter bed.

4. The device (101) according to one of the preceding claims, wherein a working width (W) of the soil tillage element which is at least rotatable about a rotation axis, which working width extends traverse to the direction of travel during operation, is equal to or greater than the maximum width of the asparagus bed to be created by means of the device and/or smaller than or equal to the maximum width of a winter bed to be processed.

5. The device (101) according to one of the preceding claims, wherein the soil tillage member is provided with soil tillage elements, for example digging blades, which are attached to a driven bar (15), preferably next to each other and/or forming a central angle (α) with each other, for rotating the digging blades about the rotation axis by means of the driven bar.

6. The device (101) according to one of the preceding claims, wherein the device is a self-propelled device.

7. The device (101) according to one of the preceding claims, wherein the device is provided with at least two wheels (132, 134, 136, 138), the distance between which, measured traverse to the direction of travel, is greater than the maximum width of the winter bed, with the maximum width of the soil tillage member being smaller than the distance between the at least two wheels measured traverse to the direction of travel.

8. The device (101) according to one of the preceding claims, wherein the device is provided with at least two front wheels (132, 134), the distance between which is greater than the maximum width of the winter bed, and with at least two rear wheels (136, 138), the distance between which is greater than the maximum width of the winter bed.

9. A method for creating at least one asparagus bed from a winter bed, wherein the asparagus bed is formed by means of a device (101) according to one of the preceding claims.

10. The method according to Claim 9, wherein the soil in the winter bed is tilled by means of the device in order to create the asparagus bed, in which case an area (202) between two winter beds extending in a longitudinal direction remains uncultivated by the device.

11. The method according to Claim 9 or 10, wherein only the soil in the winter bed is cultivated by means of the device in order to create the asparagus bed.

12. The method according to one of the preceding Claims 9-11, wherein a green area is landscaped between two asparagus beds, for example a green area planted with grass or a grass-like plant.

13. The method according to claim 12 wherein the green area forms a track for moving vehicles across the asparagus field.

14. The method according to one of the preceding Claims 10-13, wherein an asparagus bed is created by means of the following successive steps which are to be carried out:
- forming the winter bed into a higher and narrower intermediate form than the winter bed;
- cultivating the soil of the winter bed in the formed intermediate form for providing soil with a more airy composition than the soil of the winter bed; and/or
- forming the asparagus bed by means of the soil with the more airy composition than the soil of the winter bed.

## Patentansprüche

1. Vorrichtung (101) zum Erzeugen mindestens eines Spargelbeetes (A2) aus einem Winterbeet (A1), wobei die Vorrichtung in einer Fahrtrichtung (c5) zum Erzeugen des Spargelbeetes aus dem Winterbeet beweglich ist, wobei die Vorrichtung mit mindestens einem Bodenbearbeitungsteil (11; 111') versehen ist, das mindestens ein Bodenbearbeitungselement (13, 13', 13"; 113', 113", 113") umfasst, das um eine Drehachse (x) drehbar ist, wobei die Drehachse des drehbaren Bodenbearbeitungselements im Wesentlichen quer zur Fahrtrichtung verläuft, um den Boden des Winterbeetes zur Bildung von Kulturboden für das Spargelbeet zu kultivieren, wobei das Bodenbearbeitungselement ferner einen Vorbearbeitungsmechanismus (21; 121) zum Bilden des Winterbeetes in eine höhere und schmalere Zwischenform (A3) als das Winterbeet umfasst, wobei der Boden des Winterbeetes in der gebildeten Zwischenform anschließend mittels des mindestens einen Bodenbearbeitungselements durch bewegen der Vorrichtung in Fahrtrichtung kultiviert werden kann.

2. Vorrichtung (101) gemäß Anspruch 1, wobei das Bodenbearbeitungsteil ferner eine Spargelbeetformungseinheit (17; 117) zum Bilden des Spargelbeetes nach Durchführen des Arbeitsganges mit dem mindestens einen Bodenbearbeitungselement umfasst.

3. Vorrichtung (101) gemäß einem der vorhergehenden Ansprüche, wobei der Boden des Winterbeetes durch das mindestens eine Bodenbearbeitungselement, das um eine Drehachse drehbar ist, so bearbeitet werden kann, dass ein Boden erzeugt werden kann, der eine luftigere Zusammensetzung als der Boden des Winterbeetes aufweist, wobei das Bearbeiten durch das mindestens eine Bodenbearbeitungselement vorzugsweise mindestens das Aufschöpfen und Wenden des Bodens des Winterbeetes umfasst.

4. Vorrichtung (101) gemäß einem der vorhergehenden Ansprüche, wobei eine Arbeitsbreite (W) des mindestens um eine Drehachse drehbaren Bodenbearbeitungselements, die sich im Betrieb quer zur Fahrtrichtung erstreckt, gleich oder größer als die maximale Breite des mittels der Vorrichtung zu erzeugenden Spargelbeetes und/oder kleiner oder gleich der maximalen Breite eines zu bearbeitenden Winterbeetes ist.

5. Vorrichtung (101) gemäß einem der vorhergehenden Ansprüche, wobei das Bodenbearbeitungsteil mit Bodenbearbeitungselementen, zum Beispiel Aushubmessern, versehen ist, die an einer angetriebenen Stange (15), vorzugsweise nebeneinander und/oder einen zentralen Winkel (α) miteinander bildend, zum Drehen der Aushubmesser um die Drehachse mittels der angetriebenen Stange befestigt sind.

6. Vorrichtung (101) gemäß einem der vorhergehenden Ansprüche, wobei die Vorrichtung eine selbstfahrende Vorrichtung ist.

7. Vorrichtung (101) gemäß einem der vorhergehenden Ansprüche, **dadurch gekennzeichnet, dass** die Vorrichtung mit mindestens zwei Rädern (132, 134, 136, 138) versehen ist, deren Abstand quer zur Fahrtrichtung gemessen größer als die maximale Breite des Winterbeetes ist, wobei die maximale Breite des Bodenbearbeitungsteils kleiner als der quer zur Fahrtrichtung gemessene Abstand zwischen den mindestens zwei Rädern ist.

8. Vorrichtung (101) gemäß einem der vorhergehenden Ansprüche, wobei die Vorrichtung mit mindestens zwei Vorderrädern (132, 134), deren Abstand größer als die maximale Breite des Winterbeetes ist, und mit mindestens zwei Hinterrädern (136, 138), deren Abstand größer als die maximale Breite des Winterbeetes ist, versehen ist.

9. Verfahren zum Erzeugen mindestens eines Spargelbeetes aus einem Winterbeet, wobei das Spargelbeet mittels einer Vorrichtung (101) gemäß einem der vorhergehenden Ansprüche gebildet wird.

10. Verfahren gemäß Anspruch 9, **dadurch gekennzeichnet, dass** zum Erzeugen des Spargelbeetes der Boden im Winterbeet mittels der Vorrichtung bearbeitet wird, wobei eine sich in Längsrichtung erstreckende Fläche (202) zwischen zwei Winterbeeten durch die Vorrichtung unkultiviert bleibt.

11. Verfahren gemäß Anspruch 9 oder 10, wobei zum Erzeugen des Spargelbeetes nur der Boden im Winterbeet mit der Vorrichtung kultiviert wird.

12. Verfahren gemäß einem der vorhergehenden Ansprüche 9-11, wobei zwischen zwei Spargelbeeten eine Grünfläche, beispielsweise eine mit Gras oder einer grasartigen Pflanze bepflanzte Grünfläche, angelegt wird.

13. Verfahren gemäß Anspruch 12, wobei die Grünfläche eine Fahrspur für Fahrzeuge über das Spargelfeld bildet.

14. Verfahren gemäß einem der vorhergehenden Ansprüche 10-13, **dadurch gekennzeichnet, dass** ein Spargelbeet durch die folgenden, nacheinander durchzuführenden Schritte erzeugt wird:
- Bilden des Winterbeetes in eine höhere und schmalere Zwischenform als das Winterbeet;
- Kultivieren des Bodens des Winterbeetes in der gebildeten Zwischenform, um einen Boden mit einer luftigeren Zusammensetzung als der Boden des Winterbeetes zu erhalten; und/oder
- Bilden des Spargelbeetes mit Hilfe des Bodens mit der luftigeren Zusammensetzung als der Boden des Winterbeetes.

## Revendications

1. Dispositif (101) pour créer au moins un lit d'asperges (A2) à partir d'un lit d'hiver (A1), lequel dispositif est déplaçable dans une direction de déplacement (c5) pour créer le lit d'asperges à partir du lit d'hiver, dans lequel le dispositif est pourvu d'au moins un organe de tillage du sol (11 ; 111') comprenant au moins un élément de tillage du sol (13, 13', 13" ; 113', 113", 113") qui peut tourner autour d'un axe de rotation (x), dans lequel l'axe de rotation de l'élément de tillage du sol rotatif s'étend sensiblement transversalement à la direction de déplacement pour cultiver le sol du lit d'hiver pour former un sol cultivé pour le lit d'asperges, dans lequel l'organe de tillage du sol comprend en outre un mécanisme de prétraitement (21 ; 121) pour former le lit d'hiver en une forme intermédiaire (A3) plus haute et plus étroite que le lit d'hiver, dans lequel le sol du lit d'hiver dans la forme intermédiaire formée peut être cultivé par la suite au moyen d'au moins un élément de tillage du sol en déplaçant le dispositif dans le sens de déplacement.

2. Dispositif (101) selon la revendication 1, dans lequel l'organe de tillage du sol comprend en outre une unité de formation de lit d'asperges (17 ; 117) pour former le lit d'asperges après avoir effectué l'opération utilisant l'au moins un élément de tillage du sol.

3. Dispositif (101) selon l'une des revendications précédentes, dans lequel le sol du lit d'hiver peut être traité au moyen d'au moins un élément de tillage du sol qui peut tourner autour d'un axe de rotation de telle manière que le sol présentant une composition plus aérée que le sol du lit d'hiver peut être créé, de préférence le tillage au moyen de l'au moins un élément de tillage du sol comprend au moins le ramassage et le retournement du sol du lit d'hiver.

4. Dispositif (101) selon l'une des revendications précédentes, dans lequel une largeur de travail (W) de l'organe de tillage du sol qui peut tourner au moins autour d'un axe de rotation, laquelle largeur de travail s'étend transversalement à la direction de déplacement pendant le fonctionnement, est égale ou supérieure à la largeur maximale du lit d'asperges à créer au moyen du dispositif et/ou inférieure ou égale à la largeur maximale d'un lit d'hiver à traiter.

5. Dispositif (101) selon l'une des revendications précédentes, dans lequel l'organe de tillage du sol est pourvu d'éléments de tillage du sol, par exemple des lames de creusage, qui sont attachées à une barre entraînée (15), de préférence les uns à côté des autres et/ou formant un angle au centre (α) les uns avec les autres, pour faire tourner les lames de creusage autour de l'axe de rotation au moyen de la barre entraînée.

6. Dispositif (101) selon l'une des revendications précédentes, dans lequel le dispositif est un dispositif automoteur.

7. Dispositif (101) selon l'une des revendications précédentes, dans lequel le dispositif est pourvu d'au moins deux roues (132, 134, 136, 138), la distance entre elles, mesurée transversalement à la direction de déplacement, est supérieure à la largeur maximale du lit d'hiver, avec la largeur maximale de l'organe de tillage du sol étant inférieure à la distance entre les au moins deux roues mesurée transversalement à la direction de déplacement.

8. Dispositif (101) selon l'une des revendications précédentes, dans lequel le dispositif est pourvu d'au moins deux roues avant (132, 134), la distance entre elles est supérieure à la largeur maximale du lit d'hiver, et d'au moins deux roues arrière (136, 138), la distance entre elles est supérieure à la largeur maximale du lit d'hiver.

9. Procédé de création d'au moins un lit d'asperges à partir d'un lit d'hiver, dans lequel le lit d'asperges est formé au moyen d'un dispositif (101) selon l'une des revendications précédentes.

10. Procédé selon la revendication 9, dans lequel le sol du lit d'hiver est tillé au moyen du dispositif afin de créer le lit d'asperges, auquel cas une zone (202) entre deux lits d'hiver s'étendant dans une direction longitudinale reste incultivé par le dispositif.

11. Procédé selon la revendication 9 ou 10, dans lequel seul le sol dans le lit d'hiver est cultivé au moyen du dispositif afin de créer le lit d'asperges.

12. Procédé selon l'une des revendications précédentes 9 à 11, dans lequel une zone verte est aménagée entre deux lits d'asperges, par exemple une zone verte plantée d'herbe ou d'une plante herbacée.

13. Procédé selon la revendication 12, dans lequel la zone verte forme une piste pour déplacer des véhicules à travers le champ d'asperges.

14. Procédé selon l'une des revendications précédentes 10 à 13, dans lequel un lit d'asperges est créé au moyen des étapes successives suivantes qui doivent être réalisées :
- former le lit d'hiver en une forme intermédiaire plus haute et plus étroite que le lit d'hiver ;
- cultiver le sol du lit d'hiver sous la forme intermédiaire formée pour conférer au sol une composition plus aérée que le sol du lit d'hiver ; et/ou
- former le lit d'asperges au moyen du sol avec la composition plus aérée que le sol du lit d'hiver.
